(19) **Europäisches Patentamt**
**European Patent Office**
**Office européen des brevets**

(11) **EP 2 538 058 B1**

(12) **EUROPEAN PATENT SPECIFICATION**

(45) Date of publication and mention
of the grant of the patent:
**13.01.2016 Bulletin 2016/02**

(51) Int Cl.:
*F02D 19/06* (2006.01)    *F02D 41/04* (2006.01)
*F02D 31/00* (2006.01)

(21) Application number: **11765501.9**

(86) International application number:
**PCT/JP2011/057602**

(22) Date of filing: **28.03.2011**

(87) International publication number:
**WO 2011/125601 (13.10.2011 Gazette 2011/41)**

(54) **IDLE ROTATION SPEED CONTROL DEVICE FOR BIFUEL ENGINE**

LEERLAUFGESCHWINDIGKEITS-STEUERVORRICHTUNG FÜR EINEN BI-FUEL-MOTOR

DISPOSITIF DE COMMANDE DE VITESSE DE ROTATION AU RALENTI POUR MOTEUR
BICARBURANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **01.04.2010 JP 2010085048**

(43) Date of publication of application:
**26.12.2012 Bulletin 2012/52**

(73) Proprietors:
• **Aisan Kogyo Kabushiki Kaisha**
**Obu-shi, Aichi 474-8588 (JP)**
• **TOYOTA JIDOSHA KABUSHIKI KAISHA**
**Toyota-shi, Aichi-ken, 471-8571 (JP)**

(72) Inventors:
• **SHIRASAWA Hirotaka**
**Obu-shi**
**Aichi 474-8588 (JP)**

• **KOMODA Takao**
**Toyota-shi,**
**Aichi-ken, 471-8571 (JP)**
• **TSUTSUI Daisuke**
**Toyota-shi,**
**Aichi-ken, 471-8571 (JP)**

(74) Representative: **Prüfer & Partner GbR**
**European Patent Attorneys**
**Sohnckestraße 12**
**81479 München (DE)**

(56) References cited:
**EP-A1- 1 950 404     JP-A- S6 296 742**
**JP-A- 2003 184 588     JP-A- 2004 138 078**
**JP-A- 2004 278 490     JP-A- 2007 162 632**
**JP-A- 2010 030 457     US-B1- 6 289 881**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a bi-fuel engine to be driven by switching from first fuel to second fuel to be used and vice versa, which are different in kind. More particularly, the present invention relates to an idle rotation speed control apparatus for controlling idle rotation speed of the bi-fuel engine.

BACKGROUND ART

Conventionally, there is known a bi-fuel engine to be driven by switching for example liquid fuel such as gasoline to gas fuel such as compression natural gas (CNG) and vice versa. As this type of technique, for example, Patent Document 1 listed below discloses a technique to control idle rotation speed of an engine.

In an operating state of the engine using the liquid fuel, when the liquid fuel is switched to the gas fuel, an amount of air intake (intake amount) decreases as compared with the case of using the liquid fuel. This may deteriorate combustibility of the gas fuel in relation to a compression ratio of the engine. During idle operation (idle running), especially, the engine rotation speed may lower, damaging idle stability.

In the technique disclosed in Patent Document 1, therefore, there are provided discrimination means for discriminating a using time (period) of gas fuel or a using time (period) of liquid fuel and intake amount correcting means for increasing the intake amount during at least idle operation and during the gas fuel using time as compared with the liquid fuel using time. The intake amount correcting means is configured to open a solenoid valve provided in a bypass passage to thereby increase the intake amount. By this configuration, during the idle operation and during the gas fuel using time, the intake amount correcting means increases the intake amount, increasing filling efficiency of the engine so that good combustibility is ensured.

RELATED ART DOCUMENTS

PATENT DOCUMENTS

[0005]

　　　Patent Document 1: JP-A-62(1987)-96742
　　　Patent Document 2: JP-A-6(1994)-41734

DISCLOSURE OF THE INVENTION

PROBLEMS TO BE SOLVED BY THE INVENTION

However, in the technique disclosed in Patent Document 1, when the use of liquid fuel is switched to the use of gas fuel, the solenoid valve which is the intake amount correcting means is simply uniformly opened to uniformly increase the intake amount. Furthermore, during idle operation, the engine rotation speed (idle rotation speed) is generally apt to be influenced by load changes or variations such as friction resistance of the engine itself, an operating state of an air conditioner, an operating state of an automatic transmission, an operating state of a power steering, and an operating state of a generator (alternator). Thus, an actual engine rotation speed (idle rotation speed) may decrease or become unstable by just that much. In the technique disclosed in Patent Document 1, therefore, the intake amount could not be adjusted according to the use fuel after switching and the above load changes and the idle rotation speed could not be controlled stably. In the technique disclosed in Patent Document 1, furthermore, the intake amount could not be adjusted in consideration of individual differences and variations with time of the configuration of an intake system including the intake amount correcting means. Also in this regard, it is difficult to stably control the idle rotation speed.

The present invention has been made in view of the circumstances and has a purpose to provide an idle rotation control apparatus for bi-fuel engine, capable of stably controlling idle rotation speed by appropriately adjusting an amount of air intake during idle operation irrespective of switching of use between first fuel and second fuel which are different in kind.

MEANS OF SOLVING THE PROBLEMS

(1) This object is achieved by the idle rotation speed control apparatus having the features of claim 1.

According to the above configuration (1), during the idle operation of the bi-fuel engine, the intake amount adjusting means is controlled based on the control value by the control value calculating means in order to adjust the idle rotation speed to the target idle10 rotation speed. Herein, during the idle operation using the first fuel, the control value is corrected by the first correcting means in order to correct the intake amount according to the use of first fuel. Specifically, when the predetermined learning condition is satisfied, the value of the feedback correction value is calculated as the first learning correction value by the first correcting means, and the control value is corrected based on the first learning correction value. On the other hand, during the idle operation using the second fuel, the control value is corrected by the second correcting means in order to correct the intake amount according to the use of the second fuel. Specifically, when the predetermined learning condition is satisfied, the value of the feedback correction value is calculated as the second learning correction value by the second correcting means, and the control value is corrected based on the second learning correction value. Consequently, when the idle operation using the first fuel is switched to the idle operation using the second fuel, the intake amount adjusting means is controlled by reflecting the second learning correction value according to the use of the second fuel. Thus, shortage or overage of the intake amount is appropriately adjusted and compensated, thereby restraining an abrupt change in idle rotation speed. In addition, when the first learning correction value is calculated by the first correcting means during idle operation using the first fuel, the lower limit value of the second learning correction value is calculated by the first lower limit value calculating means by utilizing the first learning correction value. On the other hand, when the second learning correction value is calculated by the second correcting means during idle operation using the second fuel, the lower limit value of the first learning correction value is calculated by the second lower limit value calculating means by utilizing the second learning correction value. During the idle operation using the first fuel, the control value is corrected by the first correcting means on condition that the lower limit value of the calculated first learning correction value is the lower limit of the control value. During the idle operation using the second fuel, the control value is corrected by the second correcting means on condition that the lower limit value of the calculated second learning correction value is the lower limit of the control value. Accordingly, for example, when the idle operation using the first fuel is switched to the idle operation using the second fuel immediately after battery-clear, even when learning of the second learning correction value is delayed, the lower limit value of the second learning correction value is calculated by utilizing the first learning correction value having been learned in advance. Thus, the control value related to the second fuel is corrected on condition that the lower limit value of the second learning correction value is the lower limit of the control value, so that a decrease in the control value is restrained.

EFFECTS OF THE INVENTION

According to the above configuration (1), irrespective of switching of use between the first fuel and the second fuel which are different in kind, the intake amount during idle operation can be adjusted appropriately, so that and the idle rotation speed can be controlled stably. Furthermore, it is possible to quickly control the idle rotation speed to the target idle rotation speed in response to mechanical individual differences of an intake system including the intake passage and the intake amount adjusting means, variations with time, and others. In addition, it is possible to restrain a decrease in intake amount immediately after the fuel to be used is switched, thereby preventing a decrease in idle rotation speed.

BRIEF DESCRIPTION OF THE DRAWINGS

FIG. 1 is a schematic configuration view showing a bi-fuel engine system in a first embodiment;
FIG 2 is a flow chart showing process details of ISC in the first embodiment;
FIG 3 is a time chart showing changes in various parameters associated with switching from idle operation using gasoline to idle operation using CNG in the first embodiment;
FIG 4 is a flow chart showing process details of ISC in a second embodiment; and
FIG 5 is a time chart showing changes in various parameters associated with switching from idle operation using gasoline to idle operation using CNG in the second embodiment.

MODE FOR CARRYING OUT THE INVENTION

<First Embodiment>

A detailed description of a preferred embodiment of an idle rotation speed control apparatus for bi-fuel engine not according to the present invention will now be given referring to the accompanying drawings.

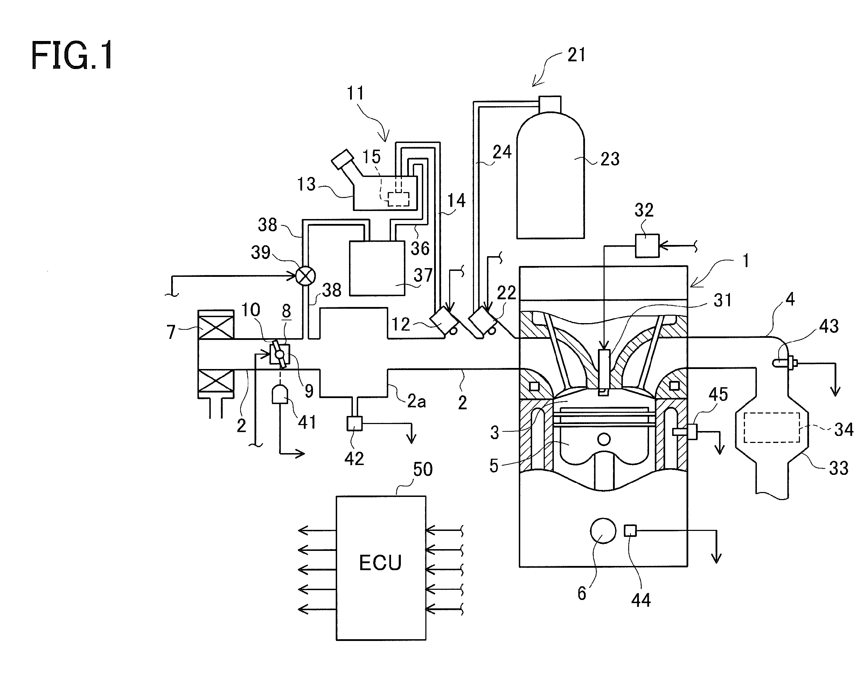

FIG. 1 is a schematic configuration view showing a bi-fuel engine system including an idle rotation speed control apparatus according to the invention. In a multi-cylinder engine 1, combustible gas mixture containing fuel and air to be supplied through an intake passage 2 is exploded and combusted (burnt) in a combustion chamber 3 of each cylinder and exhaust gas after combustion is discharged through an exhaust passage 4. Accordingly, the engine 1 operates a piston 5 to rotate a crank shaft 6, thereby obtaining power.

An air cleaner 7 provided at an inlet of the intake passage 2 cleans the air to be taken in this passage 2. An electronic throttle device 8 placed in the intake passage 2 corresponds to an intake amount adjusting means of the invention and operates to adjust an amount of air (intake amount) QA allowed to flow through the intake passage 2 and then be sucked in the combustion chamber 3 of each cylinder. The electronic throttle device 8 causes an actuator 9 to open and close a throttle valve 10. A throttle sensor 41 provided in the electronic throttle device 8 detects an opening degree (throttle opening degree) TA of the throttle valve 10 and outputs an electric signal representing a detected value thereof. An intake pressure sensor 42 provided in a surge tank 2a of the intake passage 2 detects intake pressure PM in the surge tank 2a and outputs an electric signal representing a detected value thereof.

The engine 1 of this embodiment is a bi-fuel engine to be driven by using at least one of compression natural gas (CNG) which is a gas fuel and gasoline which is a liquid fuel. Thus, the engine 1 includes a gasoline supply device 11 for supplying gasoline and a CNG supply device 21 for supplying CNG In this embodiment, gasoline corresponds to first fuel and CNG corresponds to second fuel in the present invention. The gasoline supply device 11 includes a plurality of gasoline injectors 12 individually provided in cylinders, a gasoline tank 13 and a gasoline line 14 to supply gasoline to the injectors 12. The gasoline tank 13 is provided with a gasoline pump 15 for feeding gasoline under pressure. The gasoline fed from the gasoline tank 13 to each of the injectors 12 through the gasoline line 14 is injected and supplied to an intake port of each cylinder by each injector 12 which is controlled.

The CNG supply device 21 includes a plurality of CNG injectors 22 provided individually in the cylinders, a CNG cylinder or tank 23 and a CNG line 24 to supply CNG to the injectors 22. In the CNG line 24, a CNG cutoff valve and a regulator (both being not shown) are provided. CNG supplied from the CNG cylinder 23 to each CNG injector 22 through the CNG line 24 is injected and supplied to the intake port of each cylinder by each injector 22 which is controlled.

A plurality of ignition plugs 31 provided individually in the cylinders of the engine 1 ignite upon receipt of high voltage outputted from igniters 32. The ignition time of each ignition plug 31 is determined based on output timing of high voltage by the corresponding igniter 32.

A catalyst convertor 33 placed in the exhaust passage 4 contains a three-way catalyst 34 for cleaning exhaust discharged from the engine 1 to the exhaust passage 4. An oxygen sensor 43 placed in the exhaust passage 4 detects oxygen concentration Ox of the exhaust discharged from the engine 1 to the exhaust passage 4 and outputs an electric signal representing a detected value thereof

A rotation speed sensor 44 provided in the engine 1 detects the rotation speed of the crank shaft 6, i.e., engine rotation speed NE, and outputs an electric signal representing a detected value thereof A water temperature sensor 45 provided in the engine 1 detects the temperature THW of cooling water (cooling water temp.) flowing through the engine 1, and outputs an electric signal representing a detected value thereof.

In the present embodiment, an electronic control unit (ECU) 50 receives various signals outputted from the throttle sensor 41, the intake pressure sensor 42, the oxygen sensor 43, the rotation speed sensor 44, and the water temperature sensor 45. The ECU 50 controls individually the injectors 12 and 22, the igniters 32, and others to execute fuel injection control including air-fuel ratio control, ignition timing control, idle rotation speed control (ISC), and others, based on the received signals.

Herein, the fuel injection control is intended to individually control the injectors 12 and 22 according to an operating state of the engine 1 to thereby control a fuel injection amount and a fuel injection time. The air-fuel ratio control is intended to individually control the injectors 12 and 22 based on a detection signal of the oxygen sensor 43 to feedback control an air-fuel ratio of the engine 1 to a predetermined target air-fuel ratio such as a theoretical air-fuel ratio or the like. The ignition time control is intended to control each igniter 32 according to the operating state of the engine 1 to thereby control the ignition time of each ignition plug 31. Furthermore, ISC is intended to control the electronic throttle device 8 to bring an actual engine rotation speed NE (idle rotation speed) to a predetermined target idle rotation speed TNE during idle operation of the engine 1. In the present embodiment, the ECU 50 makes the start-up of the engine 1 and the idle operation immediately after completion of the start-up by using gasoline, and then switches to the idle operation using CNG.

In the present embodiment, the ECU 50 corresponds to control means, correcting means, and target idle rotation speed calculating means of the present invention. The ECU 50 includes well known components such as a central processing unit (CPU), a read only memory (ROM), a random access memory (RAM), a backup RAM, and others. The ROM stores in advance predetermined control programs related to various controls mentioned above. The ECU 50 executes the above various controls according to those control programs.

Moreover, the bi-fuel engine system of the present embodiment includes a well-known automatic transmission, an air conditioner, a power steering, a power source, and other devices (all of which are not shown).

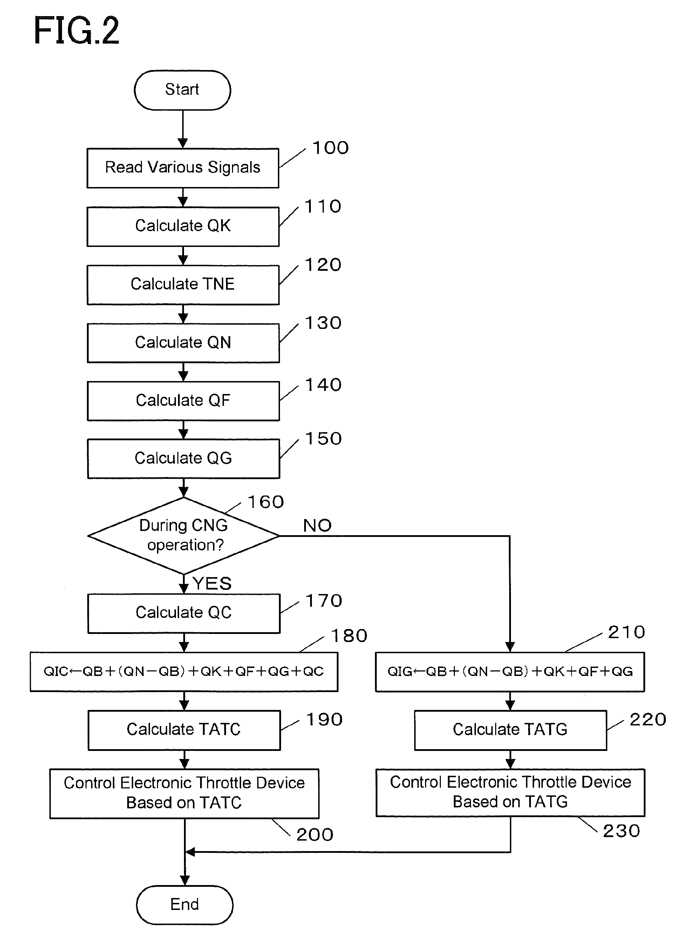

Of various controls to be executed by the ECU 50, the process details of ISC will be explained in detail below referring to a flow chart shown in FIG 2.

When the process shifts to this routine, the ECU 50 reads, in step 100, various signals such as the throttle opening degree TA, intake pressure PM, engine rotation speed NE, cooling water temperature THW, and oxygen concentration Ox from various sensors 41 to 45.

In step 110, the ECU 50 calculates various correction values QK. Herein, these correction values QK comprehensively include a correction value related to a warm-up state of the engine 1, a correction value related to rotation decrease of the engine 1, a correction value related to an electrical load state of a power source, a correction value related to an ND range state of the automatic transmission, a correction value related to a state of the air conditioner, and a correction value of a state of the power steering. The ECU 50 calculates those correction values individually based on the detected values of the cooling water temperature THW, engine rotation speed NE, and others, by referring to a predetermined maps.

In step 120, the ECU 50 calculates a target idle rotation speed TNE The ECU 50 calculates this target idle rotation speed TNE based on the state of the air conditioner, an electrical load state of the power source, the ND range state of the automatic transmission, and others, by referring to a predetermined table.

In step 130, the ECU 50 calculates a required intake flow rate QN. The ECU 50 calculates this required intake flow rate QN based on the calculated target idle rotation speed TNE by referring to a predetermined map.

In step 140, the ECU 50 calculates a feedback correction value QF. The ECU 50 calculates this feedback correction value QF based on a parameter defined by a difference between the target idle rotation speed TNE and an actual engine rotation speed (idle rotation speed) during idle operation, by referring to a predetermined map.

In step 150, the ECU 50 calculates a learning correction value QG When the feedback correction value QF is a predetermined value or more and the difference between the target idle rotation speed TNE and the idle rotation speed NE is a predetermined value or less, the ECU 50 calculates the feedback correction value QF as the learning correction value QG and updates the learning correction value QG An amount corresponding to this learning correction value QG is subtracted from the feedback correction value QF in calculation of each of ISC flow rates QIC and QIG mentioned later to adjust each of the ISC flow rates QIC and QIG to be totally uniform. This learning correction value QG reflects mechanical individual differences of an intake system including the intake passage 2 and the electronic throttle device 8, variations with time, and others.

In step 160, the ECU 50 determines whether or not the engine 1 is currently in the CNG operation using CNG If this termination result is affirmative, the ECU 50 advances the process to step 170.

In step 170, the ECU 50 calculates a CNG correction value QC for CNG operation. The ECU 50 calculates this CNG correction value QC based on the target idle rotation speed TNE by referring to a predetermined map.

In step 180, the ECU 50 calculates a final ISC flow rate QIC for CNG operation. The ECU 50 calculates this ISC flow rate QIC according to the following expression (1). In the expression (1), "QB" denotes a predetermined base flow rate (constant).

$$QIC \leftarrow QB + (QN - QB) + QK + QF + QG + QC \qquad ---(1)$$

In step 190, the ECU 50 calculates a target opening degree TATC for the electronic throttle device 8 during CNG operation. The ECU 50 calculates this target opening degree TATC based on the calculated ISC flow rate QIC by referring to a predetermined map.

In step 200, the ECU 50 controls the electronic throttle device 8 based on the target opening degree TATC during CNG operation, thereby controlling the engine rotation speed NE during idle operation using CNG

If the determination result is negative in step 160, on the other hand, the ECU 50 shifts the process to step 210 to calculate a final ISC flow rate QIG for gasoline operation. The ECU 50 calculates this ISC flow rate QIG according to the following expression (2).

$$QIG \leftarrow QB + (QN - QB) + QK + QF + QG \qquad ---(2)$$

In step 220, the ECU 50 calculates a target opening degree TATG for the electronic throttle device 8 during gasoline operation. The ECU 50 calculates this target opening degree TATG based on the calculated ISC flow rate QIG for use of gasoline, by referring to a predetermined map.

In step 230, the ECU 50 controls the electronic throttle device 8 based on the target opening degree TATG during gasoline operation, thereby controlling the engine rotation speed NE during idle operation using gasoline.

According to the idle rotation speed control apparatus of the present embodiment explained above, during idle operation of the engine 1, target opening degrees TATC and TATG related to the electronic throttle device 8 are calculated by the ECU 50 to control the idle rotation speed NE to the target idle rotation speed TNE Herein, the ECU 50 performs the start-up of the engine 1 and the idle operation immediately after completion of the start-up by using gasoline, and then switches to the idle operation using CNG During idle operation using gasoline, the ECU 50 calculates the ISC flow rate QIG for gasoline operation based on the base flow rate QB, required flow rate QN, various correction values QK, the feedback correction value QF, and the learning correction value QG Based on the target opening degree TATG converted from the above ISC flow rate QIG, the electronic throttle device 8 is controlled by the ECU 50 to adjust the intake amount for idle operation using gasoline.

On the other hand, when the idle operation using gasoline is switched to the idle operation using CNG, the ECU 50 calculates the ISC flow rate QIC for CNG operation based on the base flow rate QB, required flow rate QN, various correction values QK, feedback correction value QF, learning correction value QG, and CNG correction value QC. Based on the target opening degree TATC converted from the above flow rate QIC, the electronic throttle device 8 is controlled by the ECU 50 to adjust the intake amount for idle operation using CNG Herein, the ISC flow rate QIC for CNG operation includes the CNG correction value QC corresponding to a correction amount for CNG operation, differently from the ISC flow rate QIG for gasoline operation. Specifically, when the idle operation using gasoline is switched to the idle operation using CNG, the ECU 50 calculates the ISC flow rate QIC corrected with the CNG correction value QC in order to correct the intake amount according to the use of CNG Accordingly, when the idle operation using gasoline is switched to the idle operation using CNG, the electronic throttle device 8 is controlled by reflecting the CNG correction value QC, thereby appropriately adjusting and compensating shortage or overage of intake amount due to fuel switching. This restrains an abrupt change of the idle rotation speed NE. Consequently, at the time of fuel switching, it is possible to restrain rotation shock of the engine 1 and also stably control the idle rotation speed NE after the fuel switching. Irrespective of switching of use between gasoline and CNG, the intake amount during idle operation can be appropriately adjusted, and thus the idle rotation speed NE can be stably controlled.

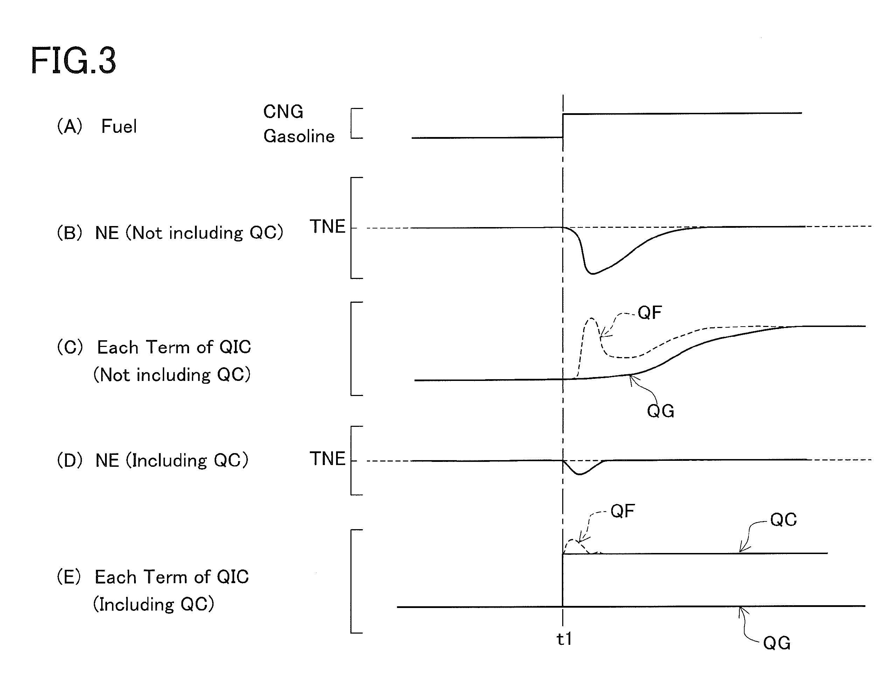

FIG 3 is a time chart showing changes in various parameters associated with switching from the idle operation using gasoline to the idle operation using CNG In FIG 3, (A) shows kinds of used fuels, (B) shows changes in engine rotation speed NE in the case of not including the CNG correction value QC, and (C) shows changes in each correction term related to the ISC flow rate QIC in the case of not including the CNG correction value QC. Furthermore, (D) shows changes in idle rotation speed NE in the case of including the CNG correction value QC, and (E) shows each correction term related to the ISC flow rate QIC in the case of including the CNG correction value QC.

In FIG 3, when the fuel is switched from gasoline to CNG at the time t1 as shown in (A), the intake amount conventionally becomes insufficient with respect to CNG, deteriorating combustibility. Thus, the idle rotation speed NE abruptly decreases from the target idle rotation speed TNE as shown in (B). Accordingly, the feedback correction value QF abruptly changes as shown in (C). Thereafter, the learning correction value QG gradually increases as shown in (C). As the feedback correction value QF gradually increases, the idle rotation speed NE converges to the target idle rotation speed TNE as shown in (B).

In the present embodiment, in contrast, in FIG 3, when the fuel is switched from gasoline to CNG at the time t1 as shown in (A), the CNG correction value QC is immediately added as shown in (E). Thus, the intake amount is corrected by just that much with respect to CNG, restraining deterioration of combustibility. As a result, the idle rotation speed NE once decreases only slightly from the target idle rotation speed TNE as shown in (D) and is maintained stably at approximately the target idle rotation speed TNE Since the idle rotation speed NE is maintained at the target idle rotation speed TNE in this way, the learning correction value QG is kept constant as shown in (E).

In the present embodiment, the feedback correction value QF constituting the ISC flow rates QIC and QIG is reflected in control of the electronic throttle device 8 by the ECU 50 in order to bring the idle rotation speed NE close to the target idle rotation speed TNE At the time of start of idle operation in which calculation of the feedback correction value QF is not completed, the learning correction value QG constituting the ISC flow rates QIC and QIG is reflected in control of the electronic throttle device 8 by the ECU 50 in order to bring the idle rotation speed NE close to the target idle rotation speed TNE Accordingly, it is possible to appropriately quickly control the electronic throttle device 8 according to mechanical individual differences of an intake system including the intake passage 2 and the electronic throttle device 8, variations with time, and so on. Thus, the idle rotation speed NE can be quickly controlled to the target idle rotation speed TNE

In the present embodiment, an optimal target idle rotation speed TNE is calculated by the ECU 50 in response to load changes of the engine 1 during idle operation. The CNG correction value QC according to the calculated target idle rotation speed TNE is calculated by the ECU 50. Consequently, the CNG correction value QC is calculated according to the target idle rotation speed TNE, so that shortage or overage of intake amount is compensated according to the load changes of the engine 1, and changes in idle rotation speed NE are restrained. Therefore, the idle rotation speed NE can be accurately controlled to the target idle rotation speed TNE

EP 2 538 058 B1

<Second Embodiment>

A second embodiment of an idle rotation speed control apparatus for bi-fuel engine according to the present invention will be explained in detail below referring to accompanied drawings.

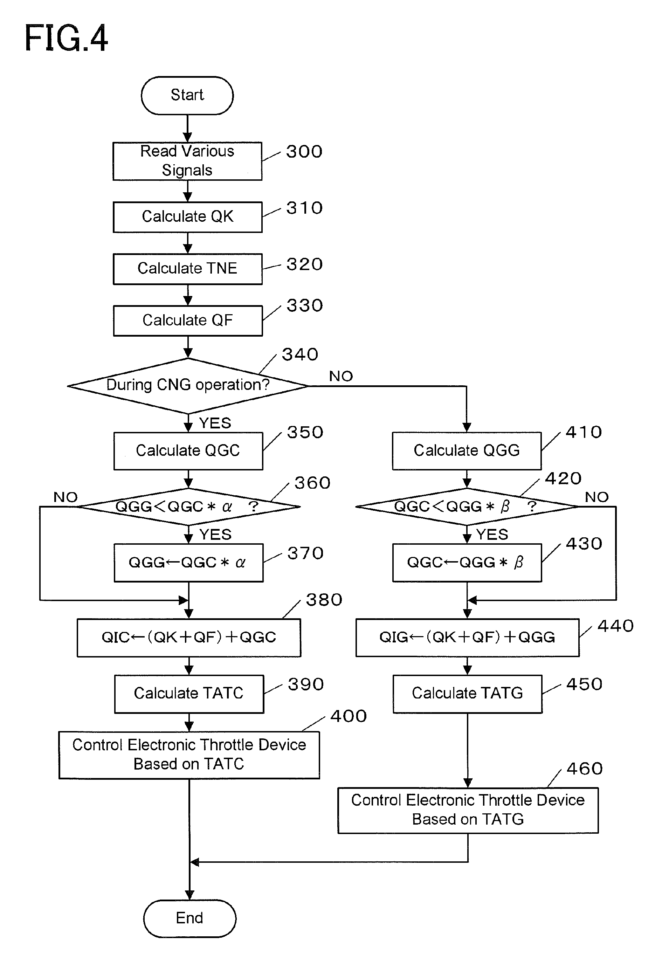

This embodiment differs from the first embodiment in the process details of ISC. FIG 4 is a flow chart showing the process details of ISC to be executed by the ECU 50. In the present embodiment, the ECU 50 corresponds to control means, first correcting means, second correcting means, first lower limit value calculating means, and second lower limit value calculating means in the present invention.

When the process shifts to this routine, in step 300, the ECU 50 reads various signals such as a throttle opening degree TA, intake pressure PM, engine rotation speed NE, cooling water temperature THW, oxygen concentration Ox, and others from various sensors 41 to 45.

In step 310, the ECU 50 calculates various correction values QK. Herein, these correction values QK comprehensively include a correction value related to a warm-up state of the engine 1, a correction value related to a rotation decrease of the engine 1, a correction value related to an electrical load state of a power source, a correction value related to an ND range of an automatic transmission, a correction value related to a state of an air conditioner, a correction value related to a state of a power steering, and others. The ECU 50 calculates the above correction values individually based on the cooling water temperature THW, the detected value of the engine rotation speed NE, and others, by referring to predetermined maps.

In step 320, the ECU 50 calculates a target idle rotation speed TNE The ECU 50 calculates this target idle rotation speed TNE based on the state of the air conditioner, the electrical load state of the power source, the ND range state of the automatic transmission, and others, by referring to a predetermined table.

In step 330, the ECU 50 calculates a feedback correction value QF. The ECU 50 calculates this feedback correction value QF based on a parameter defined by a difference between the target idle rotation speed TNE and an actual idle rotation speed NE, by referring to a predetermined map.

In step 340, the ECU 50 determines whether or not the engine 1 is currently in a CNG operation using CNG If this determination result is affirmative, the ECU 50 advances the process to step 350.

In step 350, the ECU 50 calculates a CNG learning correction value QGC for CNG operation. When the feedback correction value QF is a predetermined value or more and the difference between the target idle rotation speed TNE and the idle rotation speed NE is a predetermined value or less, the ECU 50 calculates the feedback correction value QF as the CNG learning correction value QGC and updates the CNG learning correction value QGC. An amount corresponding to this CNG learning correction value QGC is subtracted from the feedback correction value QF in calculation of the ISC flow rate QIC mentioned later to adjust the ISC flow rate QIC to be totally uniform. This CNG learning correction value QGC reflects mechanical individual differences of an intake system including the intake passage 2 and the electronic throttle device 8, variations with time, and others.

In step 360, thereafter, the ECU 50 determines whether or not a gasoline learning correction value QGG for gasoline operation which has already been learned is smaller than a multiplication result of the above calculated CNG learning correction value QGC and a coefficient $\alpha$. If this determination result is affirmative, the ECU 50 sets, in step 370, the multiplication result of the learning correction value QGC and the coefficient $\alpha$ as the gasoline learning correction value QGC and shifts the process to step 380. On the other hand, if the determination result in step 360 is negative, the ECU 50 directly shifts the process to step 380.

The above processes in steps 360 and 370 are directed to calculate a lower limit value of the gasoline learning correction value QGG by utilizing the CNG learning correction value QGC. This lower limit value of the gasoline learning correction value QGG is referred to for temporary measures when gasoline operation is started while learning of the learning correction value QGG is not conducted or delayed for some reasons, so that a decrease in idle rotation speed NE during gasoline operation can be restrained. In the present embodiment, if the gasoline learning correction value QGG having been already learned is smaller than the multiplication result of the CNG learning correction value QGC and the coefficient $\alpha$, the multiplication result of the CNG learning correction value QGC and the coefficient $\alpha$ is updated and learned as the lower limit value of the gasoline learning correction value QGG.

In step 380 following step 360 or step 370, the ECU 50 calculates a final ISC flow rate QIC for CNG operation. The ECU 50 calculates this ISC flow rate QIC by the following expression (3).

$$QIC \leftarrow (QK + QF) + QGC \qquad ---(3)$$

In step 390, the ECU 50 then calculates a target opening degree TATC related to the electronic throttle device 8 during CNG operation. The ECU 50 calculates this target opening degree TATC based on the calculated ISC flow rate QIC by referring to a predetermined map.

7

In step 400, the ECU 50 controls the electronic throttle device 8 based on the target opening degree TATC during CNG operation, thereby controlling the idle rotation speed NE during CNG operation.

On the other hand, if the determination result is negative in step 340, the ECU 50 shifts the process to step 410.

In step 410, the ECU 50 calculates the gasoline learning correction value QGG The ECU 50 calculates the gasoline learning correction value QGG for gasoline operation. When the feedback correction value QF is the predetermined value or more and the difference between the target idle rotation speed TNE and the idle rotation speed NE is the predetermined value or less, the ECU 50 calculates the feedback correction value QF as the gasoline learning correction value QGG and updates the gasoline correction value QGG An amount corresponding to this gasoline learning correction value QGG is subtracted from the feedback correction value QF in calculation of the ISC flow rate QIG mentioned later to adjust the ISC flow rate QIG to be totally uniform. This gasoline learning correction value QGG reflects mechanical individual differences of an intake system including the intake passage 2 and the electronic throttle device 8, variations with time, and others.

In step 420, thereafter, the ECU 50 determines whether or not the CNG learning correction value QGC is smaller than a multiplication result of the gasoline learning correction value QGG and a coefficient β ("α<(β" in the present embodiment). If this determination result is affirmative, the ECU 50 sets, in step 430, the multiplication result of the gasoline learning correction value QGG and the coefficient β as the CNG learning correction value QGC and shifts the process to step 440. On the other hand, if the determination result in step 420 is negative, the ECU 50 directly shifts the process to step 440.

The above processes in steps 420 and 430 correspond to the processes in steps 360 and 370 and are directed to calculate a lower limit value of the CNG correction value QGC by utilizing the gasoline learning correction value QGG This lower limit value of the CNG learning correction value QGC is referred to for temporary measures when gasoline operation is switched to CNG operation while learning of the learning correction value QGC is not conducted or is delayed for some reasons, so that a decrease in idle rotation speed NE during CNG operation can be restrained. In the present embodiment, if the CNG learning correction value QGC having been already learned is smaller than the multiplication result of the gasoline learning correction value QGG and the coefficient β, this multiplication result of the gasoline learning correction value QGG and the coefficient β is updated and learned as the lower limit value of the learning correction value QGC for CNG operation.

In step 440 following step 420 or step 430, the ECU 50 calculates a final ISC flow rate QIG for gasoline operation. The ECU 50 calculates this ISC flow rate QIG by the following expression (4).

$$QIG \leftarrow (QK+QF)+QGG \qquad ---(4)$$

In step 450, the ECU 50 then calculates a target opening degree TATG related to the electronic throttle device 8 during gasoline operation. The ECU 50 calculates this target opening degree TATG based on the calculated ISC flow rate QIG by referring to a predetermined map.

In step 460, the ECU 50 controls the electronic throttle device 8 based on the target opening degree TATG during gasoline operation, thereby controlling the idle rotation speed NE during gasoline operation.

According to the idle rotation speed control apparatus of the present embodiment explained above, during idle operation of the engine 1, target opening degrees TATC and TATG related to the electronic throttle device 8 are calculated by the ECU 50 to control the idle rotation speed NE to the target idle rotation speed TNE Herein, the ECU 50 performs the start-up of the engine 1 and the idle operation immediately after completion of the start-up by using gasoline, and then switches to the idle operation using CNG During the idle operation using gasoline, the ECU 50 calculates the ISC flow rate QIG for gasoline operation based on various correction values QK, feedback correction value QF, and gasoline learning correction value QGG Herein, during the idle operation using gasoline, the ECU 50 calculates the ISC flow rate QIG by correcting the ISC flow rate QIG with the gasoline learning correction value QGG to correct the intake amount according to the use of gasoline. Based on the target opening degree TATG converted from the above ISC flow rate QIG, the electronic throttle device 8 is controlled by the ECU 50 to adjust the intake amount for the idle operation using gasoline.

On the other hand, when the idle operation using gasoline is switched to the idle operation using CNG, the ECU 50 calculates the ISC flow rate QIC for CNG operation based on various correction values QK, the feedback correction value QF, and the CNG learning correction value QGC. Based on the target opening degree TATC converted from the above ISC flow rate QIC, the electronic throttle device 8 is controlled by the ECU 50 to adjust the intake amount for the idle operation using CNG Herein, during the idle operation using CNG, the ECU 50 calculates the ISC flow rate QIC by correcting the ISC flow rate QIC with the CNG learning correction value QGC to correct the intake amount according to the use of CNG Accordingly, when the idle operation using gasoline is switched to the idle operation using CNG, the electronic throttle device 8 is controlled by reflecting the correction according to the use of CNG, thereby appropriately adjusting and compensating shortage or overage of intake amount. This restrains an abrupt change of the idle rotation speed NE. Consequently, at the time of fuel switching, it is possible to restrain rotation shock of the engine 1 and also stably control the idle rotation speed NE after the fuel switching. Irrespective of switching of use between gasoline and CNG, the intake amount during the idle operation can be appropriately adjusted, and thus the idle rotation speed NE can be stably controlled.

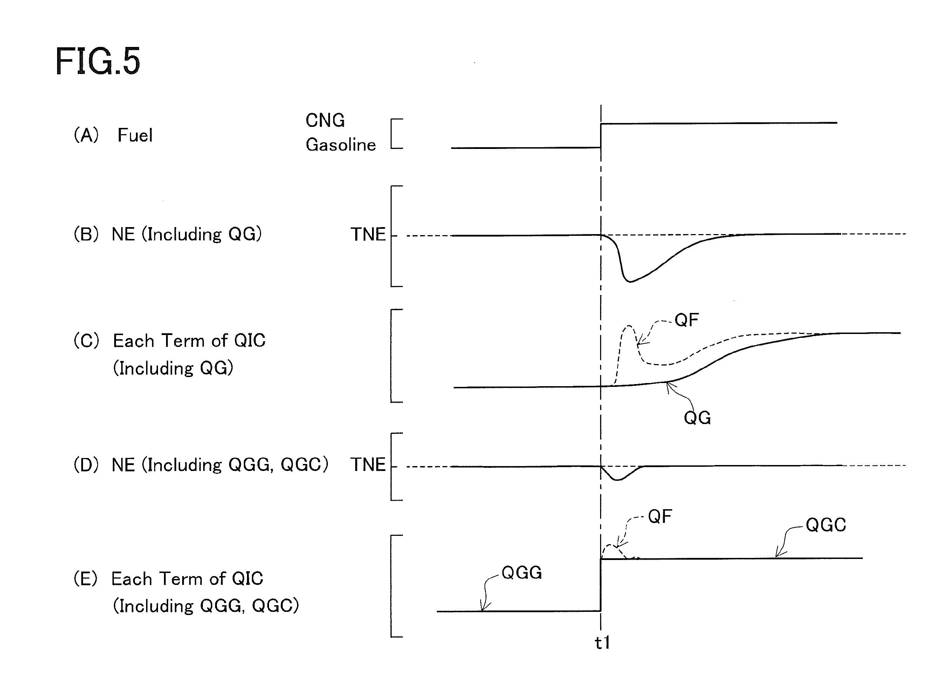

FIG 5 is a time chart showing changes in various parameters associated with switching from the idle operation using gasoline to the idle operation using CNG In FIG 5, (A) shows kinds of used fuels, (B) shows changes in engine rotation speed NE in the case of including the learning correction value QG, and (C) shows changes in each correction term related to the ISC flow rate QIC in the case of including the learning correction value QG Furthermore, (D) shows changes in idle rotation speed NE in the case of including the gasoline learning CNG and the CNG learning correction value QGC, and (E) shows changes in each correction term related to the ISC flow rate QIC in the case of including the above learning correction values QGG and QGC.

In FIG 5, when the fuel is switched from gasoline to CNG at the time t1 as shown in (A), the intake amount conventionally becomes insufficient with respect to CNG, deteriorating combustibility. Thus, the idle rotation speed NE abruptly decreases from the target idle rotation speed TNE as shown in (B). Accordingly, the feedback correction value QF abruptly changes as shown in (C). Thereafter, the learning correction value QG gradually increases as shown in (C). As the feedback correction value QF gradually increases, the idle rotation speed NE converges to the target idle rotation speed TEN as shown in (B).

In the present embodiment, in contrast, in FIG 5, when the fuel is switched from gasoline to CNG at the time t1 as shown in (A), the learning correction value QGG during gasoline operation is simultaneously changed to the learning correction value QGC during CNG operation as shown in (E). Thus, the intake amount is corrected by just that much with respect to CNG, thereby restraining deterioration of combustibility. As a result, the idle rotation speed NE once decreases only slightly from the target idle rotation speed TNE as shown in (D) and is maintained stably at approximately the target idle rotation speed TNE Since the idle rotation speed NE is maintained at the target idle rotation speed TNE in this way, the feedback correction value QF is kept constant as shown in (E).

In the present embodiment, the feedback correction value QF constituting the ISC flow rates QIC and QIG is reflected in control of the electronic throttle device 8 by the ECU 50 in order to bring the idle rotation speed NE close to the target idle rotation speed TNE Accordingly, it is possible to quickly bring the idle rotation speed NE close to the target idle rotation speed TNE

In the present embodiment, at the time of start of the idle operation where calculation of the feedback correction value QF is not completed or at the time of switching the idle operation using gasoline to the idle operation using CNG, the learning correction values QGC and QGG to correct the ISC flow rates QIC and QIG are reflected in control of the electronic throttle device 8 by the ECU 50 to bring the idle rotation speed NE close to the target idle rotation speed TNE Accordingly, it is possible to quickly control the electronic throttle device 8 according to mechanical individual differences of an intake system including the intake passage 2 and the electronic throttle device 8, variations with time, and others. Thus, the idle rotation speed NE can be quickly controlled to the target idle rotation speed TNE

In the present embodiment, when the gasoline learning correction value QGG is calculated during the idle operation using gasoline, the lower limit value of the other CNG learning correction value QGC is calculated by utilizing the calculated gasoline learning correction value QGG On the other hand, when the CNG learning correction value QGC is calculated during the idle operation using CNG, the lower limit value of the other gasoline learning correction value QGG is calculated by utilizing the calculated CNG learning correction value QGC. Accordingly, when the idle operation using gasoline is switched to the idle operation using CNG immediately after battery-clear, even when learning of the CNG learning correction value QGC is delayed, the lower limit value of the CNG learning correction value QGC is calculated by utilizing the gasoline learning correction value QGG having been learned in advance. Thus, the ISC flow rate QIC related to CNG is corrected on condition that the above lower limit value of the CNG learning correction value QGC is a lower limit of the ISC flow rate QIC, thereby restraining a decrease in the ISC flow rate QIC. Even immediately after the idle operation is switched to the CNG operation, the ISC flow rate QIC related to CNG does not decrease too far and thus a decrease in intake amount can be restrained, thereby preventing a decrease in idle rotation speed NE.

The present invention is not limited to the above embodiments and may be embodied in other specific forms without departing from the essential characteristics thereof.

(1) In the first embodiment, the CNG correction value QC is calculated based on the calculated target idle rotation speed TNE Alternatively, this CNG correction value may be a fixed value previously determined.

(2) In the first embodiment, the ISC flow rate QIC related to CNG and the ISC flow rate QIG related to gasoline are calculated by addition or subtraction of various correction values QB, QN, QK, QF, QG, and QC and others, but not limited thereto. Specifically, the ISC flow rate QIC for CNG and the ISC flow rate QIG for gasoline may be calculated by multiplication of various correction values and others.

(3) In the second embodiment, the ISC flow rate QIC related to CNG and the ISC flow rate QIG related to gasoline are calculated by addition of various correction values QK, QF, QGC, and QGG, but not limited thereto. Specifically, the ISC flow rate QIC related to CNG and the ISC flow rate QIG related to gasoline may be calculated by multiplication of various correction values QK, QF, QGC, and QGG

INDUSTRIAL APPLICABILITY

The present invention can be utilized in a bi-fuel engine.

DESCRIPTION OF THE REFERENCE SIGNS

| | |
|---|---|
| 1 | Engine |
| 2 | Intake passage |
| 8 | Electronic throttle device |
| 11 | Gasoline supply device |
| 12 | Gasoline injector |
| 21 | CNG supply device |
| 22 | CNG injector |
| 50 | ECU |

**Claims**

1. An idle rotation speed control apparatus for bi-fuel engine (1) to be driven by switching of use between first fuel and second fuel which are different in kind, the bi-fuel engine (1) including:

   an intake amount adjusting means (8) placed in an intake passage (2) of the bi-fuel engine (1) and for adjusting an intake amount (QA) during idle operation of the bi-fuel engine (1); and
   a control means (50) for controlling the intake amount adjusting means (8) based on a control value (TATG, TATC) to control an idle rotation speed (NE) of the bi-fuel engine (1) to a target idle rotation speed (TNE),
   **characterized in that**
   the control means (50) calculates a feedback correction value (QF) based on a difference between the target idle rotation speed (TNE) and the idle rotation speed (NE) and calculates the control value (TATG, TATC) based on at least the feedback correction value (QF),
   the apparatus further includes:

   a first correcting means (50) for correcting the control value (TATG) to correct the intake amount (QA) according to the use of the first fuel during the idle operation using the first fuel,
   the first correcting means (50) being configured to calculate a first learning correction value (QGG) as a value of the feedback correction value (QF) when a predetermined learning condition is satisfied, wherein the predetermined learning condition is satisfied when the feedback correction value (QF) is a predetermined value or more and the difference between the target idle rotation speed (TNE) and the idle rotation speed (NE) is a predetermined value or less;
   a second correcting means (50) for correcting the control value (TATC) to correct the intake amount (QA) according to the use of the second fuel during idle operation using the second fuel,
   the second correcting means (50) being configured to calculate a second learning correction value (QGC) as the value of the feedback correction value (QF) when the predetermined learning condition is satisfied;
   a first lower limit value calculating means (50) for calculating a lower limit value of the second learning correction value (QGC) by multiplying the first learning correction value (QGG) calculated by the first correcting means (50) during the idle operation using the first fuel with a first coefficient ($\beta$), and if the second learning correction value (QGC) is smaller than a multiplication result of the first learning correction value (QGG) and the first coefficient ($\beta$) then setting the second learning correction value (QGC) to that lower limit value ; and
   a second lower limit value calculating means (50) for calculating a lower limit value of the first learning correction value (QGG) by multiplying the second learning correction value (QGC) calculated by the second correcting means (50) during the idle operation using the second fuel with a second coefficient ($\alpha$), and if the first learning correction value (QGG) is smaller than a multiplication result of the second learning correction value (QGC) and the second coefficient ($\alpha$) then settting the first learning correction value (QGG) to that lower limit value,

wherein the first correcting means (50) corrects the control value (TATG) based on the first learning correction value (QGG) calculated by the second lower limit value calculating means (50) , and the second correcting means (50) corrects the control value (TATC) based on the second learning correction value (QGC) calculated by the first lower limit value calculating means (50).

**Patentansprüche**

1. Leerlaufdrehzahlregelgerät für eine Bi-Fuel-Kraftmaschine (1), die durch Schalten einer Nutzung zwischen einem ersten Kraftstoff und einem zweiten Kraftstoff anzutreiben ist, die sich hinsichtlich ihrer Art unterscheiden, wobei die Bi-Fuel-Kraftmaschine (1) Folgendes aufweist:

   eine Einlassmengeneinstelleinrichtung (8), die in einem Einlasskanal (2) der Bi-Fuel-Kraftmaschine (1) platziert ist und eine Einlassmenge (QA) während eines Leerlaufbetriebs der Bi-Fuel-Kraftmaschine (1) einstellt; und eine Regeleinrichtung (50) zum Regeln der Einlassmengeneinstelleinrichtung (8) auf der Grundlage einer Regelgröße (TATG, TATC), um eine Leerlaufdrehzahl (NE) der Bi-Fuel-Kraftmaschine (1) auf eine Sollleerlaufdrehzahl (TNE) zu regeln,

   **dadurch gekennzeichnet, dass**
   die Regeleinrichtung (50) eine Regelkorrekturgröße (QF) auf der Grundlage einer Differenz zwischen der Sollleerlaufdrehzahl (TNE) und der Leerlaufdrehzahl (NE) berechnet und die Regelgröße (TATG, TATC) zumindest auf der Grundlage des Regelkorrekturwerts (QF) berechnet,
   wobei das Gerät des Weiteren Folgendes aufweist:

   eine erste Korrektureinrichtung (50) zum Korrigieren der Regelgröße (TATG), um die Einlassmenge (QA) gemäß der Nutzung des ersten Kraftstoffes während des Leerlaufbetriebs bei Nutzung des ersten Kraftstoffes zu korrigieren,
   wobei die erste Korrektureinrichtung (50) dazu konfiguriert ist, einen ersten Lernkorrekturwert (QGG) als einen Wert des Regelkorrekturwerts (QF) zu berechnen, wenn eine vorbestimmte Lernbedingung erfüllt ist, wobei die vorbestimmte Lernbedingung dann erfüllt ist, wenn der Regelkorrekturwert (QF) ein vorbestimmter Wert oder größer ist und die Differenz zwischen der Sollleerlaufdrehzahl (TNE) und der Leerlaufdrehzahl (NE) ein vorbestimmter Wert oder kleiner ist;
   eine zweite Korrektureinrichtung (50) zum Korrigieren der Regelgröße (TATC), um die Einlassmenge (QA) gemäß der Nutzung des zweiten Kraftstoffes während des Leerlaufbetriebs bei Nutzung des zweiten Kraftstoffs zu korrigieren,
   wobei die zweite Korrektureinrichtung (50) dazu konfiguriert ist, einen zweiten Lernkorrekturwert (QGC) als den Wert des Regelkorrekturwerts (QF) zu berechnen, wenn die vorbestimmte Lernbedingung erfüllt ist;
   eine erste Einrichtung (50) zum Berechnen eines unteren Grenzwerts, um einen unteren Grenzwert des zweiten Lernkorrekturwerts (QGC) zu berechnen, indem der erste Lernkorrekturwert (QGG), der durch die erste Korrektureinrichtung (50) während des Leerlaufbetriebs bei Nutzung des ersten Kraftstoffs berechnet wird, mit einem ersten Koeffizienten ($\beta$) multipliziert wird, und falls der zweite Lernkorrekturwert (QGC) kleiner ist als ein Multiplikationsergebnis des ersten Lernkorrekturwerts (QGG) und des ersten Koeffizienten ($\beta$), wird der zweite Lernkorrekturwert (QGC) dann auf diesen unteren Grenzwert festgelegt; und
   eine zweite Einrichtung (50) zum Berechnen eines unteren Grenzwerts, um einen unteren Grenzwert des ersten Lernkorrekturwerts (QGG) zu berechnen, indem der zweite Lernkorrekturwert (QGC), der durch die zweite Korrektureinrichtung (50) während des Leerlaufbetriebs bei Nutzung des zweiten Kraftstoffs berechnet wird, mit einem zweiten Koeffizienten ($\alpha$) multipliziert wird, und falls der erste Lernkorrekturwert (QGG) kleiner ist als ein Multiplikationsergebnis des zweiten Lernkorrekturwerts (QGC) und des zweiten Koeffizienten ($\alpha$), wird der erste Lernkorrekturwert (QGG) dann auf diesen unteren Grenzwert festgelegt,
   wobei die erste Korrektureinrichtung (50) die Regelgröße (TATG) auf der Grundlage des ersten Lernkorrekturwerts (QGG) korrigiert, der durch die zweite Einrichtung (50) zum Berechnen des unteren Grenzwerts berechnet ist, und die zweite Korrektureinrichtung (50) die Regelgröße (TATC) auf der Grundlage des zweiten Lernkorrekturwerts (QGC) korrigiert, der durch die erste Einrichtung (50) zum Berechnen des unteren Grenzwerts berechnet ist.

**Revendications**

1. Dispositif de commande de régime de ralenti pour un moteur bi-carburant (1) destiné à être alimenté en commutant l'utilisation d'un premier carburant et d'un second carburant qui sont de nature différente, le moteur de bi-carburant (1) comportant :

   un moyen de réglage de débit d'admission (8) placé sur un passage d'admission (2) du moteur bi-carburant (1) et destiné à régler un débit d'admission (QA) au cours du fonctionnement au ralenti du moteur bi-carburant (1) ; et
   un moyen de commande (50) destiné à commander le moyen de réglage de débit d'admission (8) sur la base d'une valeur de commande (TATG, TATC) afin de commander un régime de ralenti (NE) du moteur bi-carburant (1) à un régime de ralenti de consigne (TNE),
   **caractérisé en ce que**
   le moyen de commande (50) calcule une valeur de correction de contre-réaction (QF) sur la base d'une différence entre le régime de ralenti de consigne (TNE) et le régime de ralenti (NE) et calcule la valeur de commande (TATG, TATC) sur la base d'au moins la valeur de correction de contre-réaction (QF),
   le dispositif comporte en outre :

   un premier moyen de correction (50) destiné à corriger la valeur de commande (TATG) afin de corriger le débit d'admission (QA) en fonction de l'utilisation du premier carburant au cours du fonctionnement au ralenti en utilisant le premier carburant,
   le premier moyen de correction (50) étant configuré de manière à calculer une première valeur de correction d'adaptation (QGG) en tant que valeur de la valeur de correction de contre-réaction (QF) lorsqu'une condition d'adaptation prédéterminée est satisfaite, dans lequel la condition d'adaptation prédéterminée est satisfaite lorsque la valeur de correction de contre-réaction (QF) est supérieure ou égale à une valeur prédéterminée et la différence entre le régime de ralenti de consigne (TNE) et le régime de ralenti (NE) est inférieure ou égale à une valeur prédéterminée ;
   un second moyen de correction (50) destiné à corriger la valeur de commande (TATC) afin de corriger le débit d'admission (QA) en fonction de l'utilisation du second carburant au cours d'un fonctionnement au ralenti en utilisant le second carburant,
   le second moyen de correction (50) étant configuré de manière à calculer une seconde valeur de correction d'adaptation (QGC) pour la valeur de la valeur de correction de contre-réaction (QF) lorsque la condition d'adaptation prédéterminée est satisfaite ;
   un premier moyen de calcul de valeur limite inférieure (50) destiné à calculer une valeur limite inférieure de la seconde valeur de correction d'adaptation (QGC) en multipliant la première valeur de correction d'adaptation (QGG) calculée par le premier moyen de correction (50) au cours du fonctionnement au ralenti en utilisant le premier carburant par un premier coefficient ($\beta$) et, si la seconde valeur de correction d'adaptation (QGC) est inférieure à un résultat de multiplication de la première valeur de correction d'adaptation (QGG) et du premier coefficient ($\beta$), alors il positionne la seconde valeur de correction d'adaptation (QGC) à cette valeur limite inférieure ; et
   un second moyen de calcul de valeur limite inférieure (50) destiné à calculer une valeur limite inférieure de la première valeur de correction d'adaptation (QGG) en multipliant la seconde valeur de correction d'adaptation (QGC) calculée par le second moyen de correction (50) au cours du fonctionnement au ralenti en utilisant le second carburant par un second coefficient ($\alpha$) et, si la première valeur de correction d'adaptation (QGG) est inférieure à un résultat de multiplication de la seconde valeur de correction d'adaptation (QGC) et du second coefficient ($\alpha$), alors il positionne la première valeur de correction d'adaptation (QGG) à cette valeur limite inférieure,
   dans lequel le premier moyen de correction (50) corrige la valeur de commande (TATG) sur la base de la première valeur de correction d'adaptation (QGG) calculée par le second moyen de calcul de valeur limite inférieure (50), et le second moyen de correction (50) corrige la valeur de commande (TATC) sur la base de la seconde valeur de correction d'adaptation (QGC) calculée par le premier moyen de calcul de valeur limite inférieure (50).

FIG.1

EP 2 538 058 B1

# FIG.2

```
        ┌─────────┐
        │  Start  │
        └────┬────┘
             │
             ▼
   ┌────────────────────┐   100
   │ Read Various Signals│
   └────────┬───────────┘
             │
             ▼
   ┌────────────────────┐   110
   │   Calculate QK     │
   └────────┬───────────┘
             │
             ▼
   ┌────────────────────┐   120
   │   Calculate TNE    │
   └────────┬───────────┘
             │
             ▼
   ┌────────────────────┐   130
   │   Calculate QN     │
   └────────┬───────────┘
             │
             ▼
   ┌────────────────────┐   140
   │   Calculate QF     │
   └────────┬───────────┘
             │
             ▼
   ┌────────────────────┐   150
   │   Calculate QG     │
   └────────┬───────────┘
             │
             ▼
         ◇ 160                    NO
     During CNG ─────────────────────────┐
     operation?                          │
         ◇                               │
         │ YES                           │
         ▼                               │
   ┌────────────────────┐   170          │
   │   Calculate QC     │                │
   └────────┬───────────┘                │
```

180  $QIC \leftarrow QB + (QN - QB) + QK + QF + QG + QC$

210  $QIG \leftarrow QB + (QN - QB) + QK + QF + QG$

190  Calculate TATC

220  Calculate TATG

200  Control Electronic Throttle Device Based on TATC

230  Control Electronic Throttle Device Based on TATG

End

14

# FIG.3

(A) Fuel

CNG
Gasoline

(B) NE (Not including QC)   TNE

(C) Each Term of QIC
(Not including QC)

QF

QG

(D) NE (Including QC)   TNE

(E) Each Term of QIC
(Including QC)

QF

QC

t1

QG

# FIG.4

```
                    ┌─────────┐
                    │  Start  │
                    └─────────┘
                         │
              ┌──────────────────┐
              │   Read Various   │ ─ 300
              │     Signals      │
              └──────────────────┘
                         │
              ┌──────────────────┐
              │   Calculate QK   │ ─ 310
              └──────────────────┘
                         │
              ┌──────────────────┐
              │  Calculate TNE   │ ─ 320
              └──────────────────┘
                         │
              ┌──────────────────┐
              │   Calculate QF   │ ─ 330
              └──────────────────┘
                         │                        340
                    ◇─────────────────◇     NO
                    │ During CNG operation? │─────────────────┐
                    ◇─────────────────◇                       │
                         │ YES                                 │
                         │        350                          │        410
              ┌──────────────────┐              ┌──────────────────┐
              │  Calculate QGC   │              │  Calculate QGG   │
              └──────────────────┘              └──────────────────┘
                         │        360                    │         420
    NO        ◇────────────────────◇          ◇────────────────────◇    NO
   ┌──────────│  QGG < QGC * α  ?  │          │  QGC < QGG * β  ?  │─────────┐
   │          ◇────────────────────◇          ◇────────────────────◇         │
   │               │ YES                           │ YES      430            │
   │    ┌──────────────────┐            ┌──────────────────┐                 │
   │    │  QGG ← QGC * α   │ ─ 370      │  QGC ← QGG * β   │                 │
   │    └──────────────────┘            └──────────────────┘                 │
   │               │                             │◄──────────────────────────┘
   └──────────────►│         380                 │         440
       ┌──────────────────────┐       ┌──────────────────────┐
       │ QIC ← (QK+QF) + QGC  │       │ QIG ← (QK+QF) + QGG  │
       └──────────────────────┘       └──────────────────────┘
                  │          390                 │          450
       ┌──────────────────┐            ┌──────────────────┐
       │  Calculate TATC  │            │  Calculate TATG  │
       └──────────────────┘            └──────────────────┘
                  │          400                 │
┌────────────────────────────────┐              │          460
│ Control Electronic Throttle     │   ┌────────────────────────────────┐
│ Device Based on TATC            │   │ Control Electronic Throttle     │
└────────────────────────────────┘   │ Device Based on TATG            │
                  │                   └────────────────────────────────┘
                  │◄─────────────────────────────┘
            ┌─────────┐
            │   End   │
            └─────────┘
```

# FIG.5

(A)  Fuel

CNG
Gasoline

(B)  NE (Including QG)

TNE

(C)  Each Term of QIC
(Including QG)

QF

QG

(D)  NE (Including QGG, QGC)   TNE

(E)  Each Term of QIC
(Including QGG, QGC)

QF

QGC

QGG

t1

EP 2 538 058 B1

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62096742 A

- JP 6041734 A